Europäisches Patentamt

European Patent Office

Office européen des brevets

(19)

(11) Numéro de publication: **0 084 482**
**B1**

(12) **FASCICULE DE BREVET EUROPEEN**

(45) Date de publication du fascicule du brevet: **27.12.85**

(51) Int. Cl.⁴: **B 25 J 3/00**

(21) Numéro de dépôt: **83400057.2**

(22) Date de dépôt: **11.01.83**

(54) Télémanipulateur téléscopique du type maître-esclave et ses moyens d'équilibrage.

(30) Priorité: **19.01.82 FR 8200734**

(43) Date de publication de la demande:
**27.07.83 Bulletin 83/30**

(45) Mention de la délivrance du brevet:
**27.12.85 Bulletin 85/52**

(84) Etats contractants désignés:
**BE DE GB IT**

(56) Documents cités:
**FR - A - 2 067 308**

(73) Titulaire: **LA CALHENE Société Anonyme, 5, rue Emile Zola, F-95870 Bezons (FR)**
Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Glachet, Charles, 42, rue du Maréchal de Rochambeau, F-41100 Vendome (FR)**
Inventeur: **Francois, Daniel, 227, Rue des Ruelles, F-41100 Vendome (FR)**
Inventeur: **Frioux, Christian, 6, rue Charles Lindbergh, F-41100 Vendome (FR)**
Inventeur: **Tentelier, Jean, 27, rue de Verdun La Ville aux Clercs, F-41160 Moree (FR)**

(74) Mandataire: **Mongrédien, André et al, c/o BREVATOME 25, rue de Ponthieu, F-75008 Paris (FR)**

## Description

La présente invention se rapporte à un télémanipulateur télescopique du type maître-esclave et concerne plus précisément, dans un tel télémanipulateur, les dispositifs permettant d'assurer en permanence l'équilibrage des bras.

On sait que les télémanipulateurs du type maître-esclave se composent d'un bras maître équipé d'une poignée de commande accessible à un opérateur et d'un bras esclave généralement identique ou semblable au bras maître et équipé d'un outil tel qu'une pince de préhension. Le bras esclave est disposé à l'intérieur d'une cellule non accessible à l'homme en raison de la présence d'une atmosphère ou de produits dangereux tels que des produits radioactifs à l'intérieur de cette cellule. Le bras maître et le bras esclave sont pourvus du même nombre de degrés de liberté et sont reliés mécaniquement au travers de la paroi de la cellule, de telle sorte que tout mouvement du bras maître et/ou de sa poignée de commande commandé par l'opérateur entraîne un mouvement identique ou semblable du bras esclave et/ou de la pince de préhension. Un hublot ménagé dans la cloison de la cellule permet ainsi à l'opérateur d'effectuer les manipulations souhaitées à l'intérieur de la cellule.

Les télémanipulateurs maître-esclave se subdivisent par ailleurs en deux grandes familles. La première de ces familles concerne les télémanipulateurs articulés dans lesquels les bras maître et esclave se composent chacun de plusieurs segments articulés qui reproduisant des mouvements comparables à celui du bras humain, dans le cas le plus fréquent où ces segments son au nombre de deux. La deuxième de ces familles, qui est la seule à être concernée par la présente invention, concerne les télémanipulateurs télescopiques dans lesquels chaque bras se compose de plusieurs segments montés des façon télescopique afin de permettre une modification de la longueur de ce bras.

De façon plus précise, les télémanipulateurs télescopiques du type maître-esclave selon la présente invention se composent d'un bras maître et d'un bras esclave télescopiques, ces bras étant articulés sur un bloc de traversée autour de deux axes d'épaule normalement parallèles entre eux et orthogonaux à l'axe du bloc, le bloc de traversée traversant la cloison de la cellule et étant monté tournant autour de son axe propre. L'extrémité de chacun des bras dispose ainsi de trois degrés de liberté de positionnement, auxquels s'ajoutent les degrés de liberté de la poignée de commande et de la pince qui ne sont mentionnés ici que pour mémoire car ils n'affectent pas l'équilibrage des bras. Par convention, on désignera dans la suite de la description les degrés de liberté liés au positionnement de chacun des bras de la façon suivante:

X: rotation des bras autor de l'axe du bloc de traversée;

Y: rotation des bras autor de leur axe d'épaule:

Z: variation de la longueur des bras.

Afin d'accroître la portée des télémanipulateurs et de faciliter l'accessibilité à certaines zones de la cellule, on équipe généralement ces télémanipulateurs de moyens permettant de réalisier un décalage du bras esclave par rapport au bras maître selon un ou plusieurs des degrés de liberté X, Y et Z, indépendamment de tout mouvement du bras maître.

Pour différentes raison liées notamment à l'encombrement des contrepoids d'équilibrage et à la nécessité de réduite le nombre mécanismes placés à l'intérieur de la cellule au strict nécessaire, compte tenu des difficultés d'intervention à l'intérieur de la cellule, les moyens d'équilibrage du bras esclave sont placés, comme ceux du bras maître, à l'extérieur de la cellule. Toutefois, on conçoit que la possibilité d'un décalage du bras esclave par rapport au bras maître selon un ou plusieurs des degrés de liberté X, Y et Z, combinée avec la nécessité de placer les moyens d'équilibrage en totalité à l'extérieur de la cellule, rendent particulièrement complexe l'équilibrage du bras esclave.

On connait à ce jour deux télémanipulateurs télescopiques maître-esclave dans lesquels l'équilibrage du bras esclave est réalisé selon deux techniques pratiquement opposées.

Ainsi, dans le premier télémanipulateur connu de ce type, une biellette portant un premier contrepoids est maintenu constamment parallèle au bras esclave lorsqu'aucun décalage en X n'existe entre le bras maître et le bras esclave. De plus, le centrepoids qui assure l'équilibrage du bras maître lorsque sa longueur Z varie, assure simultanément l'équilibrage correspondant du bras esclave. Toutefois, l'équilibrage du bras esclave n'est plus réalisé correctement par le premier contrepoids lorsqu'il existe un décalage en X ou en Z entre les deux bras. De plus, l'équilibrage en Z du bras esclave par le deuxième contrepoids n'est pas satisfaisant car la masse correspondante devient parasite lorsqu'il existe un décalage en X ou en Y du bras esclave, et cela d'autant plus que ce dernier se rapproche ainsi de l'horizontale. Ces défauts d'équilibrage sont très gênants pour l'opérateur et rendent particulièrement délicate la mise en oeuvre de ce télémanipulateur.

Le second télémanipulateur télescopique du type maître-esclave connu à ce jour assure à l'inverse un équilibrage parfait du bras esclave dans toutes les positions de ce bras et quels que soient les décalages introduits entre le bras esclave et le bras maître. Toutefois, ce résultat s'appuie sur une grande complexité mécanique qui rend ce télémanipulateur relativement peu fiable et accroît surtout très sensiblement son prix. De plus, ce télémanipulateur comprend un contrepoids monté directement sur le bras esclave afin de compenser les mouvements en Z de celui-ci, ce qui n'est pas souhaitable pour les raisons d'accessibilité évoquées précédemment et aussi parce que ce type de contrepoids mobile monté directement sur le bras augmente d'autant la masse du contrepoids servant par ailleurs à équilibrer l'ensemble du bras.

La présente invention a précisément pour objet la réalisation d'un télémanipulateur télescopique du type maître/esclave réalisant un équilibrage du bras esclave sensiblement plus satisfaisant que le premier type de télémanipulateur de la technique antérieure et présentant un prix de revient inférieur et une fiabilité sensiblement accrus par rapport au second type de télémanipulateur de la technique antérieure.

A cet effet, il est proposé conformément à l'invention un télémanipulateur télescopique comprenant un bloc de traversée de cloison monté tournant autour de son axe propre, un bras maître et un bras esclave télescopiques, ces bras étant articulés sur le bloc de traversée autor de deux d'épaules orthogonaux à l'axe du bloc, une poignée de commande montée à l'extrémité libre du bras maître, un organe de préhension monté à l'extrémité libre du bras esclave, des moyens de transmission au bras esclave et à l'organe de préhension des mouvements impartis au bras maître et à la poignée de commande, des moyens de décalage du bras esclave par rapport au bras maître, permettant de modifier la longueur et l'orientation du bras esclave autor de son axe d'épaule sans modifier les coordonnées correspondantes du bras maître, des moyens d'équilibrage du bras maître et des moyens d'équilibrage du bras esclave, ces derniers moyens comprenant au moins un contrepoids monté sur une biellette articulée sur le bloc de traversée du côte du bras maître et en sens opposé par rapport à celui-ci, autour d'un axe parallèle à ou confondu avec l'axe d'épaule du bras maître. Un télémanipulateur de ce type est connu du brevet français FR-A-2 067 308. Conformément à l'invention, un tel télémanipulateur est caractérisé en ce que les moyens d'équilibrage du bras esclave comprennent au moins un premier contrepoids monté sur une première biellette et des moyens pour déplacer le deuxième contrepoids le long de cette dernière, ces moyens étant commandés en même temps que le décalage en longueur du bras esclave par rapport au bras maître par les moyens de décalage correspondants, et au moins un deuxième contrepoids monté sur une deuxième biellette et des moyens pour déplacer le contrepoids le long de cette dernière, ces moyens étant commandés par les moyens de transmission au bras esclave d'une modification de longueur du bras maître.

Conformément à ces caractéristiques, le télémanipulateur selon l'invention est simple du point de vue mécanique puisqu'il à utiliser pour compenser les variations de longuer du bras esclave, des contrepoids disposés de façon mobile sur des biellettes articulées vers le haut sur le bloc de traversée, du côte du bras maître. Cette disposition est particulièrement avantageuse car elle permet de réaliser à l'aide des mêmes contrepoids l'équilibrage du bras esclave et la compensation des variations de longueur de ce bras. La masse des contrepoids est de ce fait sensiblement réduite par rapport aux télémanipulateurs de la technique antérieure remplissant simultanément ces deux fonctions.

Pour des raisons techniques faciles à comprende, (les masses à équilibrer n'étant pas identiques), les contrepoids servant à compenser une variation de longueur du bras esclave résultant d'une variation de longueur du bras maître sont différents de ceux qui servant à compenser une variation de longueur du bras esclave correspondant à un décalage de celui-ci par rapport au bras maître, la seconde compensation (décalage en Z) étant plus importante que la première (mouvement Z).

Conformément à une autre caractéristique de l'invention, des moyens de décalage du bras esclave par rapport au bras maître autour de l'axe du bloc de traversée sont également prévus, ces moyens étant disposés du côté du bras maître et agissant entre une première partie du bloc de traversée portant l'axe d'épaule du bras maître et une deuxième partie du bloc de traversée portant l'axe d'épaule du bras esclave, la biellette portant le premier contrepoids étant articulée sur ladite deuxième partie et la biellette portant le deuxième contrepoids étant articulée sur ladite première partie. De cette manière, les contrepoids mobiles sont placés aussi près que possible des organes correspondants servant à commander les variations de longuer du bras esclave.

De préférence, le télémanipulateur comprend de plus des moyens pour faire pivoter simultanément les biellettes autour de leur axe d'une angle égal et de même sens que l'angle de pivotement du bras esclave autor de son axe d'épaule lorsque les moyens de transmission et les moyens de décalage agissent sur le bras esclave pour le faire pivoter autour de son axe d'épaule, ces moyens pour faire pivoter la biellette assurant en retour la transmission au bras esclave de l'effet d'équilibrage dû audit contrepoids.

Selon une caractéristique secondaire de l'invention, les moyens pour transmettre au bras esclave un mouvement de pivotement du bras maître autour de son axe d'épaule comprennent un arbre tournant logé dans le bloc de traversée et entraîné en rotation par un secteur denté formé sur une pièce montée tournante sur l'axe d'épaule du bras maître, ladite pièce étant reliée au bras maître par l'intermédiaire desdits moyens pour commander le décalage angulaire du bras esclave autour de son axe d'épaule.

De préférence, la biellette portant le deuxième contrepoids est alors articulée autour d'un axe confondu avec l'axe d'épaule du bras maître, les moyens pour faire pivoter la biellette portant le deuxième contrepoids comprenant un axe solidaire de ladite biellette et de ladite pièce et les moyens pour faire pivoter la biellette portant le premier contrepoids comprenant un tirant articulé simultanément sur ladite biellette et sur un bras de levier formé sur ladite pièce.

Selon une autre caractéristique de l'invention les moyens pour transmettre au bras esclave une modification de longueur du bras maître comprennent un arbre tournant logé dans le bloc de traversée, cet arbre tournant commandant directement lesdits moyens pour déplacer le deuxième contrepoids le long de la biellette.

De préférence, l'arbre tournant servant à transmettre au bras esclave une modification de longueur du bras maître commande alors le déplacement du deuxième contrepoids le long de la biellette par l'intermédiaire d'une deuxième transmission du type chaîne-roues dentées entre ledit arbre et ledit axe d'articulations de la biellette sur le bloc de traversée et desdits moyens pour déplacer le deuxième contrepoids le long de la biellette.

De façon comparable, les moyens de décalage en longueur du bras esclave peuvent comprende un motoréducteur monté sur le bloc de traversée du côte du bras maître, ce motoréducteur commandant simultanément ledit décalage en longueur du bras esclave par l'intermédiaire d'un arbre tournant logé dans ledit bloc et le déplacement du premier contrepoids le long de la biellette par l'intermédiaire d'une première transmission du type chaîne-roues dentées entre ledit motoréducteur et ledit axe d'articulation de la biellette sur le bloc de traversée et desdits moyens pour déplacer le premier contrepoids le long de la biellette.

On décrira maintenant, à titre d'exemple non limitatif, un mode de réalisation préféré de l'invention en se référant aux dessins annexés dans lesquels:

— la figure 1 est une vue de côté, en coupe partielle, montrant de façon schématique un manipulateur télescopique du type maître-esclave réalisé conformément à la présente invention,

— la figure 2 représente à plus grande échelle la partie du bloc de traversée située à l'extérieur de la cellule et supportant le bras maître,

— la figure 3 est une vue en coupe selon la ligne III-III de la figure 2 montrant en particulier les contrepoids assurant l'équilibrage des mouvements X et Y du bras esclave et mobilisés conformément à l'invention afin de compenser un éventuel décalage en Z du bras esclave par rapport au bras maître,

— la figure 4 est une vue comparable à la figure 2 montrant encore à plus grande échelle l'articulation du bras maître à l'extrémité du bloc de traversée ainsi que les moyens permettant de commander un décalage en Y entre le bras esclave et le bras maître, et

— la figure 5 est une vue en coupe selon la ligne V—V de la figure 4 montrant en particulier le contrepoids d'équilibrage en X et Y du bras maître et les contrepoids permettant conformément à l'invention d'assurer l'équilibrage en X et en Y du bras esclave lorsque celui-ci est soumis à un mouvement Z commandé manuellement à l'aide d'un mouvement comparable du bras maître.

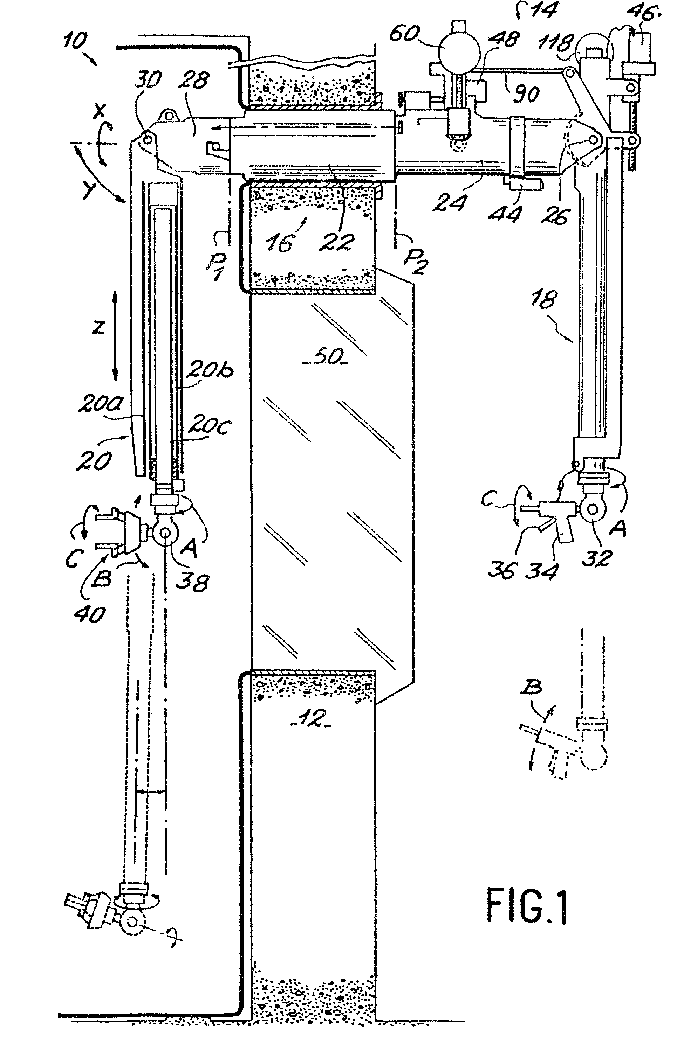

On a représenté sur la figure 1 une cloison verticale 12 d'une cellule 10 contenant une atmosphère ou des produits devant être isolés par suite de leur caractère dangereux ou de la nécessité de les protéger de l'environnement. La cellule 10 peut notamment contenir des produits radioactifs.

Lorsque des manipulations doivent être effectuées dans une telle cellule, elles doivent être commandées à distance de l'extérieur et l'on utilise à cet effet des télémanipulateurs. De préférence, un hublot 50 est prévu dans la cloison 12 afin d'autoriser une observation directe de la manipulation effectuée par l'opérateur. Dans certaines conditions, le hublot 50 pourrait toutefois être supprimé et remplacé par un ensemble électronique comprenant une ou plusieurs caméras des télévision placées à l'intérieur de la cellule et reliées à des écrans placés à l'extérieur de la cellule.

Conformément à l'invention, on utilise un télémanipulateur télescopique 14, du type maître-esclave, qui comprend un bloc de traversée 16 traversant la cloison 12 et aux extrémités duquel sont articulés, à l'extérieur de la cellule 10, un bras maître télescopique 18 et, à l'intérieur de la cellule 10, un bras esclave télescopique 20.

De façon plus précise, le bloc de traversée 16 comprend une partie cylindrique 22 montée de façon tournante dans la cloison 12 autour de son axe horizontal, une partie en porte-à-faux 24 située à l'extérieur de la cellule 10 et supportant le bras maître 18 autour d'un axe d'épaule 26 orthogonal à l'axe de la partie 22, et une partie en porte-à-faux 28 située à l'intérieur de la cellule 10 et supportant le bras esclave 20 par l'intermédiaire d'un axe d'épaule 30 également orthogonal à l'axe horizontal de la partie 22. L'axe d'épaule 30 est normalement parallèle à l'axe d'épaule 26 lorsqu'aucun décalage en X n'existe entre le bras esclave et le bras maître. Les parties 24 et 28 du bloc de traversée 16 sont normalement solidaires de la partie 22 mais elles peuvent être désolidarisées au niveau des plans de décrabotage représentés schématiquement en $P_1$ et $P_2$ sur la figure 1 à l'aide de moyens de décrabotage commandés de l'extérieur de la cellule 10 et bien connus des spécialistes de la technique. Ces moyens de décrabotage ne faisant pas partie de la présente invention ne seront pas décrits ici plus en détail. On notera simplement qu'ils permettent de changer à volonté le bras maître et le bras esclave sans affecter l'étanchéité de la cellule.

De façon également connue, chacun des bras 18 et 20 se compose de plusieurs parties télescopiques permettant d'en modifier la longueur. Ces parties sont généralement au nombre de trois et ont été représentées schématiquement en 20a, 20b et 20c pour le bras esclave, la partie externe 20a étant articulée sur l'axe d'épaule 30 alors que la partie interne 20c porte la pince de préhension. La partie intermédiaire 20b permet le décalage de la longueur du bras esclave par rapport à celle du bras maître. Le bras maître, semblable au bras esclave, ne comprend que deux parties (18a et 18b) télescopiques, assurant la commande des mouvements manuels. Le décalage des mouvements X, Y et Z est commandé par des contacteurs situés sur une poignée 34 et contrôlant des motoréducteurs qui seront décrits ultérieurement.

La partie interne du bras maître 18 porte à son extrémité inférieure une genouillère 32 supportant elle-même la poignée de commande 34. La genouillère 32 est montée de façon tournante autor de l'axe du bras 18 comme l'indique la flèche A sur la figure 1. De plus, la genouillère 32 est conçue, d'une part, de façon à permettre une orientation de la poignée 34 autour d'un axe orthogonal à l'axe du bras 18, comme l'indique la flèche B et, d'autre part, de façon à autoriser une rotation de la poignée 34 autour de son axe propre comme l'indique la flèche C. La poignée 34 dispose en outre d'une gachette 36 permettant de commander l'ouverture et la fermeture d'une pince de préhension 40 montée à l'extrémité inférieure de la partie 20c du bras esclave, par l'intermédiaire d'une genouillère 38 de même conception que la genouillère 32.

De la même façon que la genouillère 32, la genouillère 38 peut tourner autour de l'axe du bras 20, comme l'indique la flèche A, et autorise des mouvements de la pince 40 selon les directions B et C identiques à celles qui ont été définies pour la poignée 34 par rapport à la genouillère 32.

La description qui précède fait apparaître que chacun des bras du télémanipulateur 14 définit trois degrés de liberté de positionnement déterminant la position de l'extrémité de chacun des bras dans l'espace et trois degrés de liberté d'orientation déterminant l'orientation de la poignée et de la pince par rapport à cette position.

Les degrés de liberté de positionnement se définissent de la façon suivante:

X: mouvement de rotation des bras autour de l'axe horizontal du bloc de traversée 16;
Y: mouvement de pivotement des bras autour de leurs axes d'épaule;
Z: changements de longueurs des bras.

Les degrés de liberté d'orientation comprennent pour leur part:

A: mouvement de pivotement de la genouillère autor de l'axe du bras;
B: mouvement de pivotement de la poignée ou de la pince autour d'un axe orthogonal à l'axe du bras;
C: mouvement de pivotement de la poignée ou de la pince autour de son axe propre.

A ces mouvements s'ajoute le mouvement d'ouverture ou de fermeture de la pince.

Bien entendu, pour remplir la fonction qui lui est impartie, le télémanipulateur 14 doit être conçu de telle sorte qu'à tout mouvement du bras maître 18 et/ou de la poignée de commande 34 correspond un mouvement identique ou semblable du bras esclave 20 et/ou de la poignée 40. A cet effet, on utilise des moyens de transmission de mouvements bien connus des spécialistes, qui permettent de relier mécaniquement, au travers du bloc de traversée 16, le bras maître 18 au bras esclave 20 et la poignée 34 à la pince de préhension 40.

De façon plus précise, à chacun des degrés de liberté de positionnement et d'orientation définis précédemment correspond un moyen de transmission des mouvement qui se compose, d'une part, à l'intérieur de chacun des bras 18 et 20, de commande par câbles et rubans et, d'autre part, à l'intérieur du bloc de traversée 16, d'arbres tournants disposés horizontalement et dont la rotation assure la transmission mécanique aux câbles ou rubans du bras esclave 20 des mouvements impartis aux câbles ou rubans correspondants du bras maître 18. La transmission du mouvement entre les câbles et les arbres tournants s'effectue par l'intermédiaire d'arbres orthogonaux à ces arbres tournants et portant simultanément un cabestan sur lequel s'enroule le câble ou le ruban correspondant et un pignon qui s'engrène sur un pignon correspondant porté par l'arbre tournant. Cette solution permet d'assurer une bonne étanchéité au niveau de la partie 22 du bloc de traversée 16 et facilite le décrabotage des parties 24 et 28. Cette technique est bien connue et ne sera pas décrite ici plus en détail. On retiendra simplement, pour bien comprende la présente invention, qu'à chacun des degrés de liberté définis par le manipulateur 14 excepté le mouvement X, ainsi qu'au mouvement de serrage de la pince correspond, à l'intérieur du bloc de traversée 16, un arbre tournant sur lequel on peut aisément réaliser une prise de mouvement au moyen d'un pignon ou. de tout système équivalent.

Afin d'accroître la facilité de manipulation dans des zones peu accessibles de la cellule 10 et de façon également bien connue, le télémanipulateur 14 est équipé de moyens permettant de décaler le bras esclave 20 par rapport au bras maître 18. Ce décalage consiste à modifier le positionnement de l'extrémité du bras 20 portant la pince 40 sans que l'extrémité du bras maître 18 portant la poignée 34 ne soit déplacée. Il s'applique donc à chacun des degrés de liberté de positionnement X, Y et Z. En pratique, le décalage est généralement réalisé au moyen de trois commandes électriques correspondant à chacun de ces degrés de liberté. De façon plus précise, un motoréducteur 44 monté sur la partie 24 du bloc 16 commande directement le décalage angulaire en X du bras esclave 20 par rapport au bras maître 18. A cet effet, la partie 24 du bloc de traversée est réalisée en deux pièces 24b et 24c aptes à tourner l'une par rapport à l'autre lors de la mise en oeuvre du motoréducteur 44, pour commander le décalage angulaire en X des parties 28, 22 et 24b du bloc par rapport à la partie 24c portant l'axe d'épaule 26 du bras maître. Un motoréducteur 46 agit par des moyens qui seront décrits ultérieurement, de façon à commander le décalage angulaire en Y du bras esclave par rapport au bras maître. Enfin, un troisième motoréducteur 48 permet de modifier la longueur Z du bras esclave sans modifier la longueur du bras maître, par des moyens qui seront également décrits ultérieurement.

Etant donné les dimensions et les poids mis en jeu dans un télémanipulateur du type du télémanipulateur 14, on conçoit qu'il est nécessaire de réaliser un équilibrage aussi complet que possible du bras maître comme du bras esclave. Cet équilibrage doit tenir compte des mouvements X, Y et Z correspondant aux degrés de liberté de positionnement des bras. Comme on l'a évoqué précédemment, cet équilibrage est d'autant plus délict à réaliser que les systèmes correspondants doivent être disposés autant que possible à l'extérieur de la cellule et que l'existence possible d'un décalage entre le bras esclave et le bras maître complique singulièrement le problème pour ce qui concerne l'équilibrage du bras esclave.

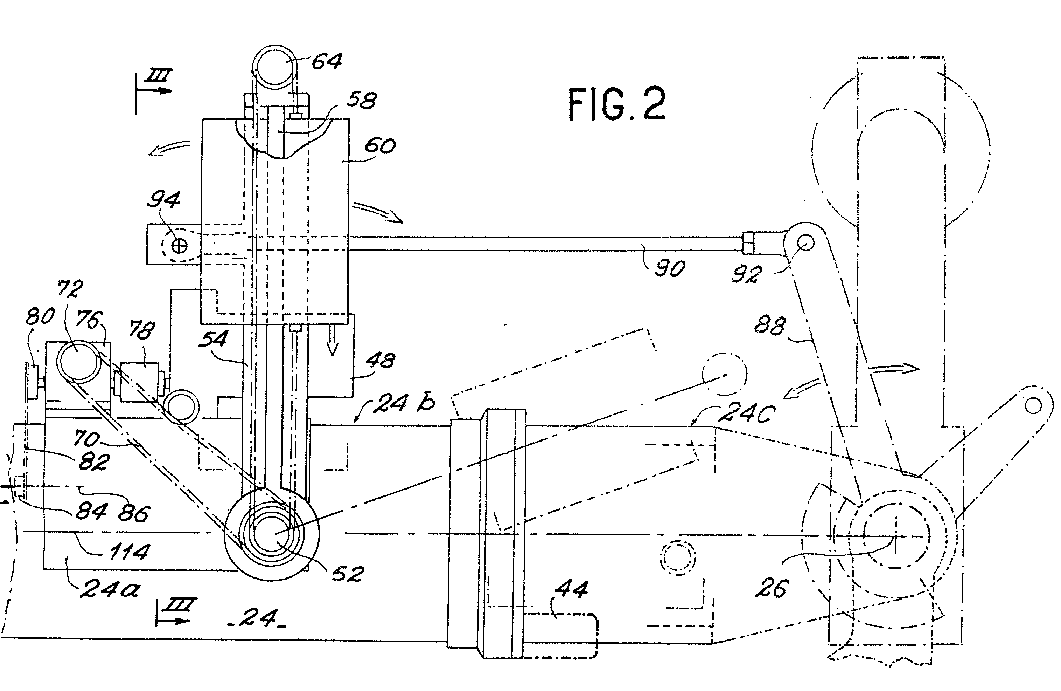

Les moyens d'équilibrage proposés conformément à la présente invention seront maintenant décrits plus en détail en se référant aux figures 2 à 5.

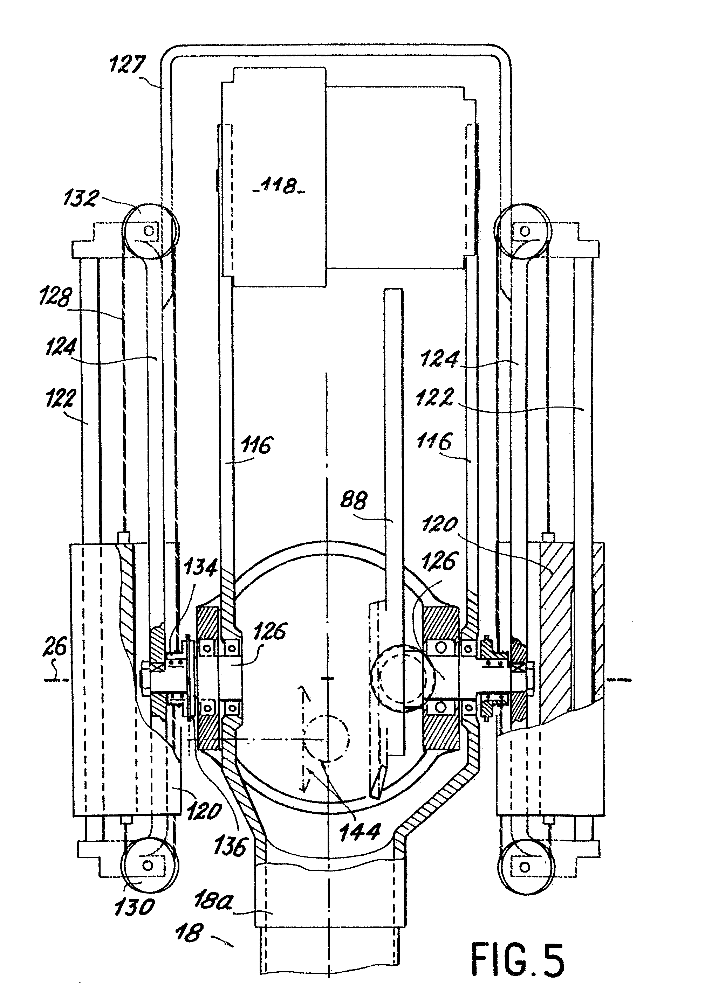

Ils comprennent tout d'abord, de façon connue, des moyens d'équilibrage du bras maître. Ainsi, on voit notamment sur la figure 5 que la partie supérieure 18a du bras maître 18 se prolonge au-delà de l'axe d'épaule 26 sous la forme de deux biellettes 116 portant un contrepoids 118. Le poids de ce contrepoids et la distance qui le sépare de l'axe d'épaule 26 sont calculés de telle sorte qu'il équilibre en permanence le bras maître 18 en combinaison avec un second contrepoids (non représenté) monté de façon mobile sur le bras maître 18 de façon à compenser les déplacements en Z de ce dernier. Ce dernier contrepoids est bien connu des spécialistes et ne sera pas décrit ici en détail. On rappellera simplement ici qu'il se déplace à l'extérieur du bras maître 18 et qu'il est solidaire d'un chariot qui permet de compenser la variation de longueur des câbles lors du mouvement Z du bras. Ainsi, ce contrepoids se rapproche de l'axe d'épaule 26 lorsque le bras maître s'allonge, et inversement, de telle sorte que la masse à équilibrer par le contrepoids 118 soit constante.

En ce qui concerne les moyens d'équilibrage du bras esclave, ils comprennent, conformément à l'invention, une première paire de contrepoids 60 assurant l'équilibrage du bras esclave en tenant compte des mouvements en X et Y commandés par le bras maître et des décalages en X, Y et Z commandés électriquement, et une deuxième paire de contrepoids 120 assurant l'équilibrage du bras esclave en tenant compte des mouvements en X, Y et Z commandés par le bras maître et du décalage en Y commandé électriquement.

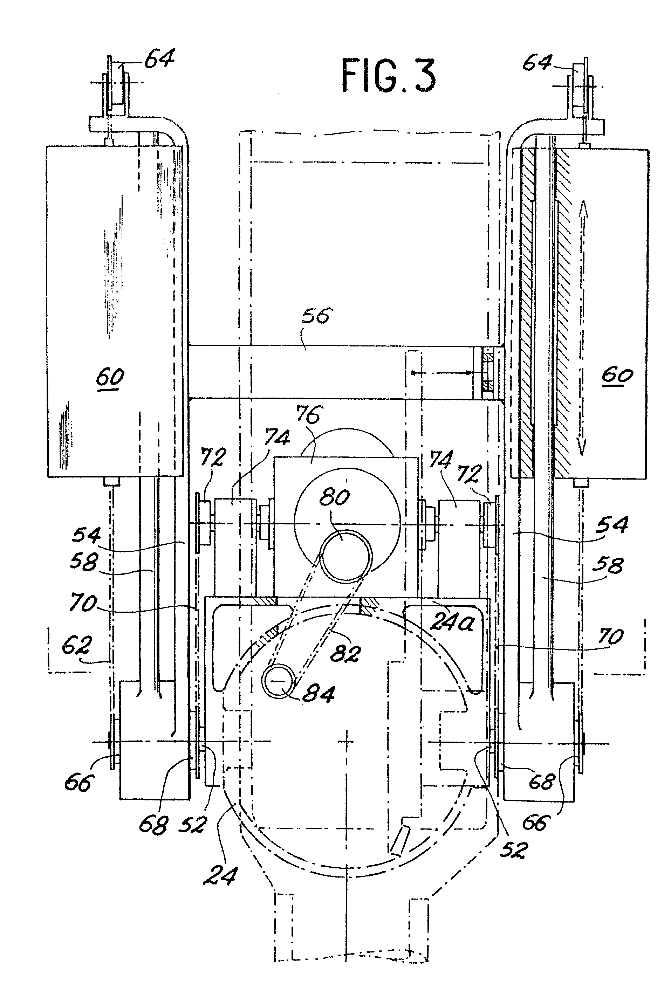

Les moyens commandant les déplacements des contrepoids 60 pour tenir compte de ces différents mouvements et décalages du bras esclave seront maintenant décrits en se référant aux figures 2 et 3.

Ainsi, sur les figures 2 et 3, on voit que la partie 24b du bloc de traversée 16 porte de part et d'autre un axe 52 parallèle à l'axe d'épaule 26 du bras maître lorsqu'il n'existe pas de décalage en X. Les axes 52 sont situés dans le prolongement l'un de l'autre et coupent l'axe du bloc de traversée. Chacun des axes 52 supporte de façon tournante une biellette 54 qui s'étend au-dessus du bloc de traversée 16 à l'opposé des bras maître et esclave, comme l'illustrent les figures. Les biellettes 54 sont reliées de façon rigide par une tige 56 chevauchant la partie 24b du bloc de traversée. Chacune des biellettes 54 comprend une tige de guidage 58 le long de laquelle peut coulisser l'un des contrepoids 60. Chacun des contrepoids 60 est fixé aux deux extrémités d'une chaîne 62 qui s'engrène sur un pignon denté 64 monté librement à l'extrémité de la biellette 54 correspondante et sur un pignon d'entraînement 66 monté tournant sur l'axe 52, de telle sorte qu'une rotation du pignon 66 a pour conséquence un déplacement du contrepoids 60 le long de la tige de guidage 58 correspondante. On comprend que la disposition de l'axe 52 sur la partie 24b à proximité du motoréducteur 48 commandant le décalage en Z du bras esclave est particulièrement avantageuse puisqu'elle permet de commander facilement le bras esclave et les contrepoids à l'aide de ce même motoréducteur.

Chacun des pignons 66 est solidaire d'un pignon 68 également monté sur l'axe 52 et disposé entre la partie 24 du bloc de traversée et la biellette 53 correspondante. Une chaîne 70 s'engrène sur chacune des roues dentées 68 et sur une seconde roue dentée 72 dont l'axe parallèle à l'axe 52 correspondant est monté tournant dans un support 74 fixé sur un support 24a formé sur la partie 24b du bloc de traversée. Les axes supportant chacune des roues dentées 72 sont tous deux entraînés en rotation par un réducteur à roues et vis sans fin 76 fixé sur le support 24.

Dans une variante de réalisation non représentée, le déplacement des contrepoids 60 est commandé par un système vis-écrou. Les pignons 66 sont alors remplacés par des pignons coniques qui s'engrènent sur d'autres pignons coniques solidaires de la tige 58 correspondante. De plus, cette tige est filetée et coopère avec un taraudage formé dans le contrepoids, de sorte que sa rotation commande le déplacement de ce dernier.

Comme l'illustre en particulier la figure 2, le réducteur 76 est entraîné par le motoréducteur 48 assurant la commande électrique du décalage en Z du bras esclave par rapport au bras maître, par l'intermédiaire d'un accouplement 78. A cet effet, le motoréducteur 48 est également fixé sur le support 24, entre les biellettes 54. La commande du décalage en Z s'effectue par l'intermédiaire d'un troisième pignon de sortie 80 du réducteur 76 et d'une chaîne 82 qui s'engrène simultanément sur le pignon 80 et sur un pignon 84 solidaire de l'arbre tournant transmettant vers le bras esclave 20 le décalage en Z commandé par le motoréducteur 48. Cet arbre tournant est représenté schématiquement en 86 sur la figure 2.

Grâce à la structure qui vient d'être décrite, on voit que l'information de commande électrique du décalage en Z du bras esclave par rapport au bras maître est transmise aux contrepoids 60, de façon à les déplacer vers le haut ou vers le bas le long des tiges de guidage 58 selon l'amplitude et le sens du mouvement de décalage commandé par le motoréducteur 48. De façon plus précise, l'amplitude du déplacement des contrepoids 60 est proportionnelle à l'amplitude du décalage commandé. De plus, le montage des biellettes 54 sur la partie 24b du bloc de traversée permet aux contrepoids 60 de suivre les mouvements en X du bras esclave, qu'ils résultent de l'action du bras maître.

D'autre part, des moyens sont prévus pour transmettre aux biellette 54 supportant les contrepoids 60 les déplacement en Y du bras maître. De façon plus précise, on transmet aux biellettes 54 portant les contrepoids 60 les déplacements en Y du bras maître 18 ainsi que les décalage en Y du bras esclave par rapport au bras maître, de telle sorte que les biellettes 54 restent constamment parallèles au bras esclave 20 lorsqu'aucun décalage en X n'existe entre les deux bras et approximativement parallèles au bras esclave lorsqu'il existe un tel décalage. Les mouvements en Y du bras esclave sont donc transmis intégralement aux biellettes 54, qu'ils résultent d'une commande manuelle du bras esclave ou d'une commande électrique de décalage de celui-ci par rapport au bras maître. On remarquera que les moyens qui vont être décrits permettent en outre de transmettre au bras esclave les forces d'équilibrage résultant de la présence des contrepoids 60.

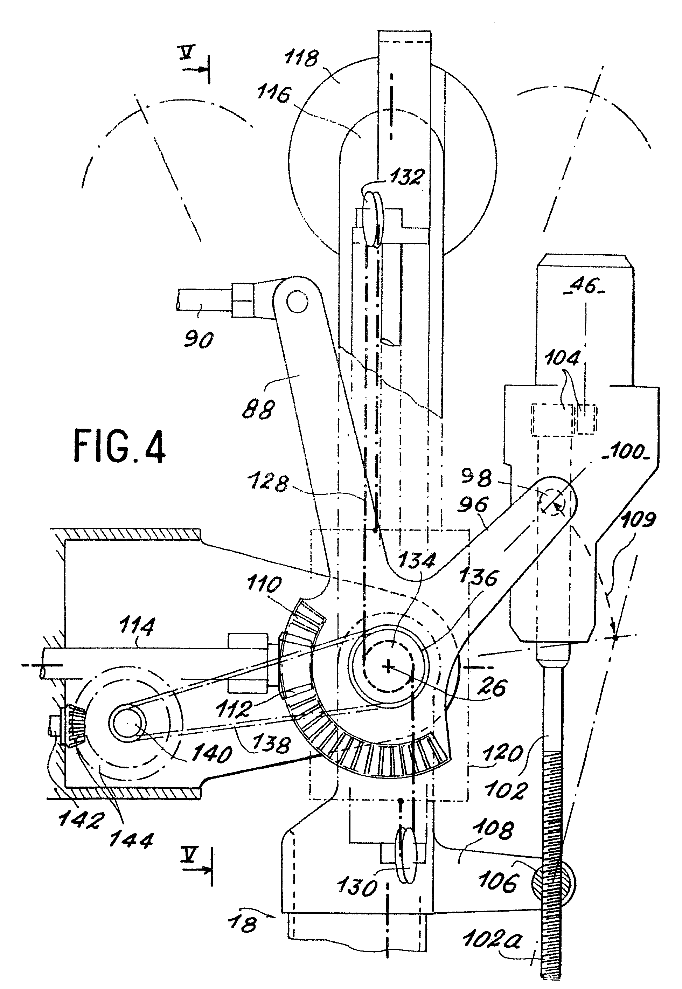

Comme l'illustrent principalement les figures 2 et 4, ces moyens comprennent un bras de levier 88 monté pivotant autor de l'axe d'épaule 26 et un tirant de transmission 90 articulé, d'une part, sur l'extrémité du bras de levier 88 opposé à l'axe d'épaule et, d'autre part, sur la barre 56 reliant les biellettes 54, de telle sorte que les rotules d'articulation 92 et 94 du tirant 90 sur le bras de levier 88 et sur la tige de liaison 56 définissent avec les axes 26 et 52 parallélogramme. Il est à noter que le tirant 90 est articulé sur le levier 88 et sur la tige 56 par l'intermédiaire de rotules 92 et 94 car il existe un décalage angulaire entre les parties 24b et 24c du bloc de traversée lorsque le motoréducteur 44 est actionné (décalage en X). De ce fait, il existe alors un léger décalage angulaire entre les biellettes 54 et le bras esclave, qui correspond à un défaut d'équilibrage du deuxième ordre, pouvant facilement être toléré.

Comme le fait apparaître la figure 4, le bras de levier 88 est solidaire d'un second bras de levier 96 dont l'extrémité opposée à l'axe d'épaule 26 est articulée par un axe 98 sur un boîtier 100 portant le motoréducteur 46 commandant les décalages en Y du bras esclave par rapport au bras maître. Une tige 102 est montée de façon tournante dans le boîtier 100, de façon à pouvoir être entraînée en rotation par le motoréducteur 46 par l'intermédiaire d'un jeu d'engrenages 104. La tige 102 fait saillie vers le bas dans la position du bras maître 18 représentée sur la figure et elle présente à son extrémité inférieure une partie filetée 102a qui vient se fixer dans un écrou 106 monté de façon tournante dans un bras 108 fixé sur le bras maître 18, à proximité de son axe d'épaule 26.

Dans une variante non représentée, cette disposition peut être inversée. Le boîtier du motoréducteur 46 est alors porté de façon pivotante à l'extrémité d'un bras de levier solidaire du bras maître au-dessus de l'axe d'épaule, et l'écrou 106 dans lequel est vissée la tige 102 est monté de façon tournante à l'extrémité du bras de levier 96.

Grâce à cette disposition, on conçoit que tout pivotement du bras maître 18 autor de son axe d'épaule selon la direction Y est transmis intégralement au bras de levier 88 par l'intermédiaire de la liaison rigide que constituent le bras 108, la tige 102 et le bras de levier 96. Le tirant 90 transmet donc intégralement aux biellettes 58 l'angle de rotation du bras maître 18 autor de son axe d'épaule 26. Etant donné que ce mouvement de pivotement est par ailleurs transmis intégralement au bras esclave 20 comme on l'a vu précédemment, l'inclinaison des bielettes 54 portant les contrepoids 60 est donc la même que celle du bras 20 lorsqu'un déplacement en Y de celui-ci est commandé manuellement à l'aide du bras maître 18, à l'erreur due à un éventuel décalage en X près.

De plus, on voit que la mise en oeuvre du motoréducteur 46 conduit par suite de la coopération de la partie filetée 102a avec l'écrou 106 à modifier la distance séparant l'axe 98 de l'écrou 106 et, par conséquent, à faire pivoter le bras de levier 96 autour de l'axe d'épaule 26, comme l'illustre la flèche 109 sur la figure 4. A ce pivotement correspond un pivotement du bras de levier 88. L'inclinaison des biellettes 54 est donc modifiée selon un angle égal et de même sens que celui selon lequel s'est déplacé le bras de levier 96 sous l'action du motoréducteur 46.

Comme le montre en particulier la figure 4, la pièce portant les bras de levier 88 et 96 sert également à transmettre vers le bras esclave les déplacements en Y résultant soit d'un déplacement du bras maître 18, soit d'une mise en oeuvre du motoréducteur 46. A cet effet, cette pièce est munie d'un secteur denté 110 centré sur l'axe d'épaule 26 et sur lequel vient s'engréner un pignon 112 solidaire d'un arbre tournant 114 transmettant au travers du bloc de traversée 16 ces mouvements en Y au bras esclave 20 (figure 1).

On comprend que la liaison mécanique ainsi réalisé entre l'arbre 114 et les biellettes 54 portant les contrepoids 60 permet aussi de transmettre au bras esclave l'effort d'équilibrage exercé par ces derniers.

De préférence, on prévoit conformément à une autre caractéristique de l'invention d'adjoindre aux contrepoids 60 les contrepoids 120 remplissant pratiquement la même fonction tout en tenant compte des variations de l'allongement Z du bras esclave commandées manuellement à l'aide du bras maître.

Comme l'illustrent en particulier les figures 4 et 5, cette dernière fonction est réalisée en disposant les contrepoids 120 de part et d'autre de la partie 24 du bloc de traversée, au niveau de l'axe d'épaule 26. De façon plus précise, chaque contrepoids 120 est reçu de façon coulissante sur une tige de guidage 122 d'une biellette 124. Chacune des biellettes 124 est solidarisée en rotation d'un axe 126 centré sur l'axe d'épaule 26 et monté tournant à la fois par rapport à la partie 24 et par rapport à la partie 18a du bras maître. Les biellettes 124 sont solidarisées par une tige de liaison 127 surplombant le contrepoids 118 comme le montre la figure 5, de façon à permettre le passage de ce contrepoids entre les biellettes 124. L'un des axes 126 est solidaire de la pièce 110 supportant notamment les bras de levier 88 et 96, de telle sorte que les déplacements en Y du bras esclave, qu'ils soient manuels ou électriques, sont également transmis aux biellettes 124. Ces dernières restent donc constamment parallèles aux biellettes 54 supportant les contrepoids 60. En d'autres termes, les biellettes 124 pivotent autor de l'axe d'épaule 26 d'un angle égal et de même sens que l'angle de pivotement du bras esclave autour de son axe d'épaule, les biellettes 124 restant constamment parallèles au bras esclave lorsqu'aucun décalage en X n'existe entre le bras esclave et le bras maître.

Afin de compléter l'équilibrage réalisé au moyen des contrepoids 60, pour tenir compte des variations Z de la longueur du bras esclave commandées manuellement en modifiant la longueur du bras maître, les contrepoids 120 se déplacent le long des biellettes 124. Ce résultat est obtenu en fixant à chacun des contrepoids 120 les extrémités d'un câble 128 reçu dans des poulies folles 130 et 132 montées aux extrémités inférieure et supérieure de la biellette 124 correspondante. De plus, chacun des câbles 128 est enroulé sur une poulie d'entraînement 134 reçue de façon tournant sur l'axe 126 correspondant, entre la biellette 124 et la partie 24 du bloc de traversée. Chacune des poulies 134 est solidaire d'un pignon 136 sur lequel vient s'engréner une chaîne 138 entraînée par un second pignon 140 dont l'axe, parallèle à l'axe d'épaule 26, est lui-même entraîne en rotation par un arbre tournant 142 par l'intermédiaire de pignons à renvoi d'angle 144. On voit que l'articulation des biellettes 124 autour de l'axe d'épaule 26 permet ainsi de commander facilement de façon simultanée le décalage en Z du bras esclave et le déplacement correspondant des contrepoids 120.

Dans une variante non représentée, la chaîne 138 peut être supprimée. Dans ce cas, le pignon 140 est remplacé par un cabestan sur lequel vient s'enrouler l'un des câbles 128 après être passé sur la poulie 134.

L'arbre tournant 142 étant l'arbre par lequel les variations de l'allongement Z du bras maître 18 sont transmis au bras esclave 20 au travers du bloc de traversée 22, on conçoit que le mécanisme qui vient d'être décrit permet de déplacer les contrepoids 120 le long des biellettes 124 sur une distance proportionnelle à la variation d'allongement Z ainsi transmise. Etant donné que les biellettes 124 portant les contrepoids 120 sont en prise directe sur l'arbre 114 transmettant au bras esclave les mouvements Y électriques et manuels, on conçoit qu'on a ainsi réalisé un équilibrage du bras esclave qui se combine avec celui obtenu à l'aide des contrepoids 60, pour équilibrer parfaitement le bras esclave lorsqu'aucun décalage en X n'est commandé à l'aide du motoréducteur 44. De plus, les moyens d'équilibrage qui viennent d'être décrits restent relativement simples, de telle sorte que le prix et la fiabilité du télémanipulateur selon l'invention sont tout à fait satisfaisants.

Bien entendu, l'invention n'est pas limitée au mode de réalisation qui vient d'être décrit à titre d'exemple, mais en couvre toutes les variantes. Ainsi, on comprendra aisément que la localisation des axes de pivotement des biellettes supportant les contrepoids d'équilibrage du bras esclave sur la partie du bloc de traversée supportant le bras maître peut être différente de celle qui a été décrite. Les biellettes 124 portant les contrepoids 120 pouraient par exemple être montées pivotantes sur un axe parallèle à l'axe d'épaule, et on peut notamment imaginer d'inverser les contrepoids 60 et les contrepoids 120. On notera toutefois, que, pour des raisons d'encombrement évidentes, il est préférable que l'un au moins de ces systèmes d'équilibrage soit articulé directement autor de l'axe d'épaule, et que la disposition décrite est celle qui assure de la manière la plus facile la prise des mouvements selon Z du bras esclave. D'autre part, on comprendra que les systèmes de transmission mécaniques par câbles et poulies ou par chaînes et pignons qui ont été décrits peuvent être remplacés par tout mécanisme équivalent. Enfin, chaque mouvement du bras esclave pourrait être compensé par un contrepoids unique et non par deux contrepoids disposés symétriquement par rapport au bloc de traversée, pourvu que le débattement de ce contrepoids ne réduise pas de façon trop sensible la portée du télémanipulateur. Dans cet esprit, on peut notamment décaler l'axe de pivotement des biellettes portant le contrepoids par rapport à l'axe de rotation du bloc de traversée, de façon à maintenir le débattement du contrepoids à une valeur acceptable.

## Revendications

1. Télémanipulateur télescopique (14) comprenant un bloc de traversée (16) de cloison (12) monté tournant autour de son axe propre, un bras maître (18) et un bras esclave (20) télescopiques, ces bras étant articulés sur le bloc de traversée autour de deux axes d'épaule (26, 30) orthogonaux à l'axe du bloc, une poignée de commande (34) montée à l'extrémité libre du bras maître, un organe de préhension (40) monté à l'extrémité libre du bras esclave, des moyens de transmission au bras esclave et à l'organe de préhension des mouvements impartis au bras maître et à la poignée de commande, des moyens (48, 46) de décalage du bras esclave par rapport au bras maître, permettant de modifier la longueur et l'orientation du bras esclave autour de son axe d'épaule sans modifier les coordonnées correspondantes du bras maître, des moyens (118) d'équilibrage du bras maître et des moyens (60, 120) d'équilibrage du bras esclave, ces derniers moyens comprenant au moins un contrepoids (60, 120) monté sur une biellette (54, 124) articulée sur le bloc de traversée (16) du côte du bras maître et en sens opposé par rapport à celui-ci, autour d'un axe (52, 126) parallèle à confondu avec l'axe d'épaule du bras maître (26), caractérisé en ce que lesdits moyens d'équilibrage du bras esclave comprennent au moins un premier contrepoids (60) monté sur une première biellette (54) et des moyens (62 à 66) pour déplacer le contrepoids le long de cette dernière, ces moyens étant commandés en même temps que le décalage en longueur du bras esclave par rapport au bras maître par les moyens de décalage (48) correspondants, et au moins un deuxième contrepoids (120) monté sur une deuxième biellette (124) et des moyens (128 à 134) pour déplacer le deuxième contrepoids le long de cette dernière, ces moyens étant commandés par les moyens de transmission (142) au bras esclave d'une modification de longueur du bras maître.

2. Télémanipulateur selon la revendication 1, caractérisé en ce qu'il comprend de plus des moyens (44) de décalage du bras esclave par rapport au bras maître autour de l'axe du bloc de traversée, ces moyens étant disposés du côte du bras maître et agissant entre une première partie (24c) du bloc de traversée portant l'axe d'épaule (26) du bras maître et une deuxième partie (28, 22, 24b) du bloc de traversée portant l'axe d'épaule (30) du bras esclave, la biellette (54) portant le premier contrepoids (60) étant articulée sur ladite deuxième partie et la biellette (126) portant le deuxième contrepoids (120) étant articulée sur ladite première partie.

3. Télémanipulateur selon la revendication 2, caractérisé en ce qu'il comprend de plus des moyens (88, 90, 110, 112) pour faire pivoter simultanément lesdites biellettes autor de leur axe d'un angle sensiblement égal et de même sens que l'angle de pivotement du bras esclave autour de son axe d'épaule lorsque les moyens de transmission et les moyens de décalage agissent sur le bras esclave (20) pour le faire pivoter autour de son axe d'épaule, ces moyens pour faire pivoter la biellette assurant en retour la transmission au bras esclave de l'effet d'équilibrage dû audit contrepoids.

4. Télémanipulateur selon la revendication 3, caractérisé en ce que les moyens pour transmettre au bras esclave un mouvement de pivotement du bras maître autour de son axe d'épaule comprennent un arbre tournant (114) logé dans le bloc de traversée et entraîne en rotation par un secteur denté (110) formé sur une pièce (88, 96) montée tournante sur l'axe d'épaule (26) du bras maître, ladite pièce étant reliée au bras maître par l'intermédiaire desdits moyens (46) pour commander le décalage angulaire du bras esclave autour de son axe d'épaule (30).

5. Télémanipulateur selon la revendication 4, caractérisé en ce que la biellette (124) portant le deuxième contrepoids (120) est articulée autour d'un axe confondu avec l'axe d'épaule (26) du bras maître, les moyens pour faire pivoter la biellette (124) portant le deuxième contrepoids (120) comprenant un axe (126) solidaire de ladite biellette (124) et de ladite pièce (88, 96) et les moyens pour faire pivoter la biellette (54) portant le premier contrepoids (60) comprenant un tirant (90) articulé simultanément sur ladite biellette (54) et sur un bras de levier (88) formé sur ladite pièce.

6. Télémanipulateur selon l'une quelconque des revendications 1 à 5, caractérisé en ce que les moyens pour transmettre au bras esclave une modification de longueur du bras maître comprennant un arbre tournant (142) logé dans le bloc de traversée, cet arbre tournant commandant directement lesdits moyens (128 à 134) pour déplacer le deuxième contrepoids (120) le long de la biellette (124).

7. Télémanipulateur selon la revendication 6, caractérisé en ce que ledit arbre tournant (142) servant à transmettre au bras esclave une modification de longueur du bras maître commande le déplacement du deuxième contrepoids (120) le long de la biellette (124) par l'intermediaire d'une deuxième transmission du type chaîne-roues dentées (136, 138, 140) entre ledit arbre et ledit axe d'articulation (126) de la biellette sur le bloc de traversée et desdits moyens (128 à 134) pour déplacer le deuxième contrepoids (120) le long de la biellette.

8. Télémanipulateur selon l'une quelconque des revendications 1 à 7, caractérisé en ce que les moyens de décalage en longueur du bras esclave comprennent un motoréducteur (48) monté sur le bloc de traversée (16) du côté du bras maître, ce motoréducteur commandant simultanément ledit décalage en longueur du bras esclave par l'intermédiaire d'un arbre tournant (86) logé dans ledit bloc et le déplacement du premier contrepoids (60) le long de la biellette (54) par l'intermédiaire d'une première transmission du type chaîne-roues dentées (68, 70, 72) entre ledit motoréducteur (48) et ledit axe (52) d'articulation de la biellette (54) sur le bloc de traversée et desdits moyens (62 à 66) pour déplacer le premier contrepoids (60) le long de la biellette.

**Patentansprüche**

1. Teleskopischer fernbedienbarer Manipulator (14) mit einem um seine eigene Achse drehbar in einer Schutzwand (12) gelagerten Durchsatzblock (16), einem teleskopischen Bedienungsarm (18) und einem teleskopischen Arbeitsarm (20), welche um jeweils eine zur Achse des Durchsatzblocks rechtwinklige Achse (26, 30) verschwenkbar am Durchgangsblock angelenkt sind, einem am freien Ende des Bedienungsarms angeordneten Bedienungsgriff (34), einem am freien Ende des Arbeitsarms angebrachten Greiforgan (40), Einrichtungen für die Übertragung von Bewegungen des Bedienungsarms und des Bedienungsgriffs auf den Arbeitsarm und das Greiforgan, Einrichtungen (48, 46) zum Verstellen des Arbeitsarms relativ zum Bedienungsarm, mittels welcher die Länge des Arbeitsarms sowie seine Winkelstellung in bezug auf seine Anlenkachse ohne entsprechende Veränderung der Länge und der Stellung des Bedienungsarms veränderbar sind, einer Gewichtsausgleichseinrichtung (118) für den Bedienungsarm und einer Gewichtsausgleichseinrichtung (60, 120) für den Arbeitsarm, mit einem wenigstens ein Gegengewicht (60, 120) tragenden Schwingarm (54, 124), welcher um eine zur Anlenkachse (26) des Bedienungsarms parallele oder mit dieser fluchtenden Achse (52, 126) verschwenkbar an der dem Bedienungsarm zugeordneten Seite des Durchsatzblocks dem Bedienungsarm gegenüber angelenkt ist, dadurch gekennzeichnet, daß die Gewichtsausgleicheinrichtung für den Arbeitsarm wenigstens ein an einem ersten Schwingarm (54) gehaltertes erstes Gegengewicht (60) und gleichzeitig mit den Stelleinrichtungen (46) zum Verstellen der Länge des Arbeitsarms betätigbare Einrichtungen (62 bis 66) zum Verstellen des Gegengewichts entlang dem Schwingarm, und wenigstens ein an einem zweiten Schwingarm (124) gehaltertes zweites Gegengewicht (120) aufweist, mit Einrichtungen (128 bis 134) zum Verschieben des zweiten Gegengewichts entlang dem zweiten Schwingarm, welche mittels der Einrichtungen (142) zum Übertragen einer Längenänderung des Bedienungsarms auf den Arbeitsarm betätigbar sind.

2. Manipulator nach Anspruch 1, dadurch gekennzeichnet, daß er ferner Einrichtungen (44) zum Verstellen des Arbeitsarms relativ zum Bedienungsarms um die Achse des Durchsatzblocks herum aufweist, welche an der dem Bedienungsarm zugeordneten Seite angeordnet sind und zwischen einem die Anlenkachse (26) des Bedienungsarms tragenden ersten Teil (24c) des Durchsatzblocks und einem die Anlenkachse (30) des Arbeitsarms tragenden zweiten Teil (28, 22, 24b) des Durchsatzblocks wirksam sind, wobei der das erste Gegengewicht (60) tragende Schwingarm (54) an dem zweiten Teil und der das zweite Gegengewicht (120) tragende Schwingarm (126) an dem ersten Teil angelenkt sind.

3. Manipulator nach Anspruch 2, dadurch gekennzeichnet, daß er ferner Einrichtungen (88, 90, 110, 112) aufweist, mittels welcher die Schwingarme gleichzeitig um einen im wesentlichen gleichen Winkel und in der gleichen Richtung mit dem Schwenkwinkel des Arbeitsarms um seine Anlenkachse um ihre jeweiligen Achsen verschwenkbar sind, wenn die Übertragungseinrichtungen und die Verstelleinrichtungen zum Verschwenken des Arbeitsarms (20) um seine Anlenkachse auf diesen einwirken, wobei die Einrichtungen zum Verschwenken der Schwingarme durch Rückübertragung auf den Arbeitsarm den durch das Gegengewicht bewirkten Gewichtsausgleich gewährleisten.

4. Manipulator nach Anspruch 3, dadurch gekennzeichnet, daß die Einrichtung zum Übertragen einer Schwenkbewegung des Bedienungsarms um seine Anlenkachse auf den Arbeitsarm eine drehbar im Durchsatzblock gelagerte Welle (114) aufweist, welche mittels eines Zahnsegments (110) an einem um die Anlenkachse (26) des Bedienungsarms verdrehbar gelagerten Teil (88, 96) in Drehung versetzbar ist, wobei das genannte Teil über die Einrichtungen (46) für die Winkelverstellung des Arbeitsarms um seine Anlenkachse (30) mit dem Bedienungsarm verbunden ist.

5. Manipulator nach Anspruch 4, dadurch gekennzeichnet, daß der das zweite Gegengewicht (120) tragende Schwingarm (124) um eine mit der Anlenkachse (26) des Bedienungsarms fluchtende Achse verschwenkbar ist, daß die Einrichtung zum Verschwenken des das zweite Gegengewicht (120) tragenden Schwingarms (124) eine fest mit dem Schwingarm (124) und dem genannten Teil (88, 96) verbundene Achse (126) aufweist, und daß die Einrichtung zum Verschwenken des das erste Gegengewicht (60) tragenden Schwingarms (54) eine Zugstange (90) aufweist, welche am Schwingarm (54) sowie an einem an dem genannten Teil ausgebildeten Hebelarm (88) angelenkt ist.

6. Manipulator nach einem der Ansprüche 1 bis 5, dadurch gekennzeichnet, daß die Einrichtungen zum Übertragen einer Längenänderung des Bedienungsarms auf den Arbeitsarm eine drehbar im Durchsatzblock gelagerte Welle (142) aufweisen, welche die Einrichtungen (128 bis 134) zum Verstellen des zweiten Gegengewichts (120) entlang dem Schwingarm (124) direkt betätigt.

7. Manipulator nach Anspruch 6, dadurch gekennzeichnet, daß die zur Übertragung einer Längenänderung des Bedienungsarms auf den Arbeitsarm dienende drehbare Welle (142) die Verstellung des zweiten Gegengewichts (120) entlang dem Schwingarm (124) über einen Kettentrieb (136, 138, 140) zwischen der genannten Welle und der Anlenkachse (126) des Schwingarms am Durchsatzblock sowie über die genannten Einrichtungen (128 bis 134) zum Verschieben
des zweiten Gegengewichts (120) entlang dem
Schwingarm bewirkt.

8. Manipulator nach einem der Ansprüche 1
bis 7, dadurch gekennzeichnet, daß die Einrichtungen zum Verstellen der Länge des Arbeitsarms einen an der dem Bedienungsarm zugeordneten Seite des Durchsatzblocks (16) angebrachten untersetzten Getriebemotor (48) aufweisen, welcher die Verstellung der Länge des
Arbeitsarms über eine drehbar im Durchsatzblock gelagerte Welle (86) und gleichzeitig damit
über einen weiteren Kettentrieb (68, 70, 72) zwischen dem Getriebemotor (48) und der Anlenkachse (52) des Schwingarms (54) am Durchsatzblock und die genannten Einrichtungen (62 bis
66) zum Verschieben des ersten Gegengewichts
(60) entlang dem Schwingarm die Verstellung
des ersten Gegengewichts (60) entlang dem
Schwingarm (54) betätigt.

## Claims

1. Telescopic remote manipulator (14) comprising a traverse unit (16) for a confinement (12)
rotatably mounted around its own axis, telescopic master (18) and slave arms (20), said arms being articulated on the traverse unit around two
shoulder axes (26, 30) orthogonal to the axis of
the unit, a control handle (34) mounted at the
free end of the master arm, a gripping unit (40)
mounted at the free end of the slave arm, means
for transmitting to the slave arm and the gripping
means movements imparted to the master arm
and the control handle, means (48, 46) for adjustment of the slave arm with respect to the master
arm, enabling modification of the length and
orientation of the slave arm around its shoulder
axis without modifying the corresponding coordinates of the master arm, means (118) for
balancing the master arm and means (60, 120) for
balancing the slave arm, said latter means comprising at least one counterweight (60, 120)
mounted on an arm (54, 124) articulated on the
traverse unit (16) on the master arm side and in
an opposite sense with respect thereto, around
an axis (52, 126) parallel to or coincident with the
shoulder axis of the master arm (26), characterized in that said balancing means for the slave
arm comprise at least one first counterweight
(60) mounted on a first arm (54) and means
(62—66) for displacing the counterweight
lengthwise of the latter, said means being controlled at the same time as the adjustment in
length of the slave arm with respect to the master arm by the corresponding adjustment means
(48), and at least one second counterweight (120)
mounted on a second arm (124) and means
(128—134) for displacing the second counter
weight lenghtwise of the latter, said means being controlled by the means (142) for transmitting to the slave arm a modification in the length of the master arm.

2. Remote manipulator according to Claim 1,
characterized in that it additionally comprises
means (44) for adjusting the slave arm with respect to the master arm around the axis of the
traverse unit, said means being located on the
master arm side and acting between a first part
(24c) of the traverse unit having the shoulder axis
(26) of the master arm and a second part (28, 22,
24b) of the traverse unit carrying the shoulder
axis (30) of the slave arm, the rod (54) carrying
the first counterweight (60) being articulated on
said second part and the arm (126) carrying the
second counterweight (120) being articulated on
said first part.

3. Remote manipulator according to Claim 2,
characterized in that it additionally comprises
means (88, 90, 110, 112) for simultaneously pivoting said arms around their axis by an angle substantially equal to and in the same sense as the
pivoting angle of the slave arm around its shoulder axis when the transmission means and the
adjusting means act on the slave arm (20) to pivot it around its shoulder axis, said means for
pivoting the arm consequently permitting transmission to the slave arm ot the balancing effect
of said counterweight.

4. Remote manipulator according to Claim 3,
characterized in that the means for transmitting
to the slave arm a pivoting movement of the
master arm around its shoulder axis comprise a
rotatable shaft (114) positioned in the traverse
unit and rotated by a toothed sector (110) formed
on a member (88, 96) rotatably mounted on the
shoulder axis (26) of the master arm, said member being connected to the master arm through
said means (46) for controlling angular adjustment of the slave arm around its shoulder axis
(30).

5. Remote manipulator according to Claim 4,
characterized in that the rod (124) carrying the
second counterweight (120) is articulated around
an axis coincident with the shoulder axis (26) of
the master arm, the means for pivoting the arm
(124) carrying the second counterweight (120)
comprising an axis (126) unitary with said rod
(124) and said member (88, 96) and means for
pivoting the rod (54) carrying the first counterweight (60) comprising a tie-rod (90) simultaneously articulated on said rod (54) and on a lever
arm (88) formed on said member.

6. Remote manipulator according to any one
of Claims 1 to 5, characterized in that the means
for transmitting to the slave arm a change in
length of the master arm comprise a rotatable
shaft (142) located in the traverse unit, said rotatable shaft directly controlling said means
(128—134) for displacing the second counterweight (120) lengthways of the arm (124).

7. Remote manipulator according to Claim 6,
characterized in that said rotatable shaft (142)
acts to transmit to the slave arm a change in
length of the master arm controlling displacement of the second counterweight (120) lengthways of the arm (124) by means of a second transmission of the chain-toothed wheel type (136, 138, 140), between said shaft and said axis of articulation (126) of the arm on the traverse unit and said means (128—134) for displacing the second counterweight (120) lengthways of the arm.

8. Remote manipulator according to any one of Claims 1 to 7, characterized in that the means for adjusting the length of the slave arm comprise a reduction motor (48) mounted on the traverse unit (16) on the master arm side, said reduction motor simultaneously controlling said length adjustment of the slave arm by means of a rotatable shaft (86) located in said unit and displacing the first counter weight (60) lengthways of the arm (54) by means of a first transmission of the chain-toothed wheel type (68, 70, 72) between said reduction motor (48) and said axis (52) for articulation of the arm (54) on the traverse unit and said means (62 to 66) for displacing the first counterweight (60) lengthways of the arm.

FIG.1

FIG.2

# FIG.3

FIG.4

FIG.5